# EUROPÄISCHE PATENTSCHRIFT

(11) **EP 2 625 387 B1**
(45) Veröffentlichungstag und Bekanntmachung des Hinweises auf die Patenterteilung: **27.05.2015**
(21) Anmeldenummer: 11764788.3
(22) Anmeldetag: 07.10.2011
(51) Int. Cl.: F01C 3/08

(54) **PUMPE, VERDICHTER ODER MOTOR MEHRSTUFIG ODER MEHRFLUTIG**
PUMP, COMPRESSOR OR MOTOR, MULTI-STAGE OR MULTI-CHANNEL
POMPE, COMPRESSEUR OU MOTEUR À ÉTAGES MULTIPLES OU À FLUX MULTIPLES

(30) Priorität: 08.10.2010 DE 102010042176; 20.12.2010 DE 102010063547
(43) Veröffentlichungstag der Anmeldung: 14.08.2013
(73) Patentinhaber: Robert Bosch GmbH, 70442 Stuttgart (DE)
(72) Erfinder: KUNATH, Sando, 70190 Stuttgart (DE); AMESOEDER, Dieter, 74321 Bietigheim-Bissingen (DE)
(86) Internationale Anmeldenummer: PCT/EP2011/067589
(87) Internationale Veröffentlichungsnummer: WO 2012/045876

(56) Entgegenhaltungen:
- WO-A1-93/12325
- WO-A1-2008/110155

## Beschreibung

### Stand der Technik

Die vorliegende Erfindung betrifft eine Drehkolbenmaschine, die als Pumpe, Verdichter oder Motor arbeitet, mit einem Rotor und einem Gegenrotor.

Aus der DE 42 41 320 A1 ist eine Drehkolbenmaschine bekannt, die als Pumpe, Verdichter oder Motor arbeitet. Bei dieser laufen Kämme von Zähnen eines rotierenden Antriebsteils zur Begrenzung von Arbeitsräumen auf einer zykloiden Fläche eines ebenfalls verzahnten Abtriebteils und treiben dabei dieses Abtriebsteil an. Zwischen den Zähnen von Abtriebsteil und Antriebsteil werden die genannten Arbeitsräume gebildet, die während des Rotierens der Teile für ihre Arbeit vergrößert bzw. verkleinert werden, um die Förderwirkung auf ein gasförmiges oder flüssiges Medium zu erzeugen. Um den Durchsatz eines zu verdichtenden Mediums zu erhöhen, schlägt die DE 42 41 320 A1 vor, zwischen dem Abtriebsteil und dem Antriebsteil ein Steuerteil derart anzuordnen, dass zwischen dem Steuerteil und dem Antriebsteil erste Arbeitsräume und zwischen dem Abtriebsteil und dem Steuerteil zweite Arbeitsräume ausgebildet werden, die einander gegenüberliegen. Entsprechend ist ein die Rotoren aufnehmendes Gehäuse derart zu gestalten, dass drei Rotoren drehbar aufgenommen werden können. Allerdings bauen derartige Gehäuse größer als wenn sie nur zur Aufnahme von zwei Rotoren ausgelegt wären.

### Zusammenfassung der Erfindung

Es kann ein Bedürfnis bestehen, auch bei einer kompakten Gestaltung des Gehäuses die Förderwirkung und/oder den zu erreichenden Druck auf ein gasförmiges oder flüssiges Medium zu erhöhen und/oder zu variieren.

Dieses Bedürfnis kann durch einen Gegenstand des unabhängigen Anspruchs gelöst werden. Vorteilhafte Ausgestaltungen sind in den abhängigen Ansprüchen angegeben.

Eine Drehkolbenmaschine, die als Pumpe, Verdichter oder Motor arbeitet, weist einen Rotor und einen Gegenrotor auf, wobei der Gegenrotor dem Rotor gegenüberliegend angeordnet ist. Der Rotor weist eine erste Stirnfläche mit einer ersten Verzahnung auf. Der Gegenrotor weist eine zweite Stirnfläche mit einer zweiten Verzahnung auf. Die erste und die zweite Verzahnung sind je aus zumindest einem Zahn und einer Zahnlücke gebildet. Die Verzahnungen stehen miteinander derart in Eingriff, dass durch Kämmen der Zähne der ersten Verzahnung und der Zähne der zweiten Verzahnung erste Arbeitsräume ausgebildet werden, wobei durch die ersten Arbeitsräume gebildete Volumina durch das Kämmen der Zähne verändert werden. Der Rotor weist eine erste Drehachse auf und der Gegenrotor weist eine zweite Drehachse auf. Hierbei schließen die erste Drehachse und die zweite Drehachse einen Winkel ein, der ungleich 0° ist. Die erste Stirnfläche des Rotors weist eine von der ersten Verzahnung räumlich getrennte dritte Verzahnung auf und die zweite Stirnfläche des Gegenrotors weist eine von der zweiten Verzahnung räumlich getrennte vierte Verzahnung auf. Die dritte und die vierte Verzahnung sind je aus mindestens einem Zahn und einer Zahnlücke gebildet. Die dritte und die vierte Verzahnung stehen miteinander derart in Eingriff, dass durch Kämmen der Zähne der dritten Verzahnung und der Zähne der vierten Verzahnung zweite Arbeitsräume ausgebildet werden, wobei durch die zweiten Arbeitsräume gebildete Volumina durch das Kämmen der Zähne verändert werden.

Somit werden also zwischen zwei einander gegenüberliegenden Rotoren, nämlich dem Rotor und dem Gegenrotor, zwei voneinander unabhängige Arbeitsräume gebildet. Somit kann also ein zu transportierendes gasförmiges oder flüssiges Medium sowohl den ersten als auch den zweiten Arbeitsräumen zugeführt werden. Auch muss die Teilung der Verzahnung der ersten Verzahnung und der dritten Verzahnung nicht gleich sein. Es können also bei der ersten Verzahnung mehr Zähne als bei der dritten Verzahnung vorhanden sein. In der Regel sind dann die erste und die dritte Verzahnung und/oder die zweite und die vierte Verzahnung nicht einteilig ausgeführt. Die erste Verzahnung weist bezüglich der dritten Verzahnung und die zweite Verzahnung bezüglich der vierten Verzahnung jeweils einen Zahn Unterschied auf. In dem hier vorliegenden Beispiel weist jeweils die zweite bzw. die vierte Verzahnung einen Zahn weniger auf als die erste bzw. dritte Verzahnung. Durch die Verwendung von nur zwei Rotoren kann das Gehäuse kompakt gestaltet sein.

Die räumliche Trennung der ersten Verzahnung von der dritten Verzahnung sowie der zweiten Verzahnung von der vierten Verzahnung bewirkt, dass ein Druckausgleich zwischen den mit einem ersten Druck beaufschlagten ersten Arbeitsräumen und einen mit einem zweiten Druck beaufschlagten zweiten Arbeitsräumen nicht erfolgt, wobei der erste Druck von dem zweiten Druck unterschiedlich sein kann. Eine Verbindung der ersten und zweiten Arbeitsräume findet, wenn überhaupt, nur statt, wenn das mittels der ersten Arbeitsräume verdichtete Medium den zweiten Arbeitsräumen zum weiteren Verdichten gewollt zugeführt wird.

In einem weiteren Ausführungsbeispiel der Erfindung ist die erste Verzahnung des Rotors in Richtung der ersten Stirnfläche gesehen als ein erster Außenring mit einem ersten Mittelpunkt und einem ersten inneren Radius ausgebildet. Die dritte Verzahnung des Rotors ist in Richtung der ersten Stirnfläche gesehen als ein erster Innenring mit einem dritten Mittelpunkt und einem ersten äußeren Radius ausgebildet. Der erste und der dritte Mittelpunkt fallen zu einem gemeinsamen Mittelpunkt zusammen, wobei der erste innere Radius gleich oder größer ist als der erste äußere Radius. Die zweite Verzahnung des Gegenrotors ist in Richtung der zweiten Stirnfläche gesehen als ein zweiter Außenring mit einem zweiten Mittelpunkt und einem zweiten inneren Radius ausgebildet. Die vierte Verzahnung des Gegenrotors ist in Richtung der zweiten Stirnfläche gesehen als ein zweiter Innenring mit einem vierten Mittelpunkt und einem zweiten äußeren Radius ausgebildet. Der zweite und der vierte Mittelpunkt fallen zu einem weiteren Mittelpunkt zusammen, wobei der zweite innere Radius gleich oder größer ist als der zweite äußere Radius.

Als Außenring ist hier die Aufsicht auf die erste bzw. zweite Verzahnungen bezeichnet. Als Innenring ist hier die Aufsicht auf die dritte bzw. vierte Verzahnungen bezeichnet Der Außenring bzw. der Innenring beispielsweise des Rotors kann sich dadurch ergeben, dass sich die erste Verzahnung, die beispielsweise als Zykloiden- oder Trochoidenverzahnung ausgestaltet sein kann, ringförmig um einen ersten inneren Kugelabschnitt, auch Kugelkalotte genannt, erstreckt und sich die dritte Verzahnung, die ebenfalls beispielsweise als Zykloiden- oder Trochoidenverzahnung ausgestaltet sein kann, um einen dritten inneren Kugelabschnitt, auch Kugelkalotte genannt, erstreckt. Somit werden die Innenseiten der beiden Verzahnungen von diesen inneren Kugelabschnitten begrenzt. Ferner kann eine Außenseite der ersten Verzahnung von einem ersten äußeren Kugelabschnitt begrenzt werden und die dritte Verzahnung kann von einem dritten äußeren Kugelabschnitt begrenzt werden, wobei in der Regel der dritte äußere Kugelabschnitt zur Begrenzung der Außenseite des Innenringes und der erste innere Kugelabschnitt zur Begrenzung der Innenseite des Außenringes zusammenfallen. Der erste innere Radius mit dem ersten Mittelpunkt wird beispielsweise gebildet, indem die tiefsten Punkte an der Innenseite der ersten Verzahnung, also die tiefsten Punkte der Zahnlücken, durch einen ersten Kreis verbunden werden, dessen Radius und Mittelpunkt eben dieser erste innere Radius und erste Mittelpunkt ist. Der erste äußere Radius mit dem dritten Mittelpunkt wird beispielsweise gebildet, indem die tiefsten Punkte der Zahnlücken an der Außenseite der dritten Verzahnung durch einen dritten Kreis verbunden werden, dessen Radius mit Mittelpunkt eben dieser erste äußere Radius mit dem dritten Mittelpunkt ist. Natürlich können die Punkte auch an anderen einander gegenüberliegenden Stellen der Verzahnungen gewählt werden. Der Außen- und der Innenring des Gegenrotors werden auf die gleiche Weise ausgeformt, so dass ein zweiter und vierter Kreis, ein zweiter innerer und zweiter äußerer Radius sowie ein zweiter und vierter Mittelpunkt gebildet werden.

Durch die Ausgestaltung, dass der erste bzw. zweite innere Radius gleich oder größer als der erste bzw. zweite äußere Radius ist, können die Rotoren, insbesondere wenn ihre Verzahnungen einteilig gefertigt sind, zur Montage lediglich zusammengesteckt werden. Eine Ausgestaltung der Außen- und Innenringe in der Art, dass der erste bzw. zweite innere Radius kleiner als der erste bzw. zweite äußere Radius ist, kann dazu führen, dass, insbesondere wenn die Verzahnungen des Rotors und des Gegenrotors einteilig ausgeführt sind, der Rotor und der Gegenrotor in dem gemeinsamen Gehäuse nicht auf einfache Weise montiert werden können, da sich möglicherweise eine oder mehrere Verzahnungen bei der Montage überdecken. Ein derartiges Problem könnte beispielsweise dadurch gelöst werden, dass eine oder mehrere Verzahnungen mehrteilig ausgeführt werden, die erst bei der Montage zu einer zusammenhängenden Verzahnung gefügt werden.

In einem weiteren Ausführungsbeispiel der Erfindung sind bei einer Drehkolbenmaschine quer zur ersten Stirnfläche des Rotors gesehen die erste Verzahnung und die dritte Verzahnung durch eine erste Stufe beabstandet. Quer zur zweiten Stirnfläche des Gegenrotors gesehen sind die zweite Verzahnung und die vierte Verzahnung durch eine zweite Stufe beabstandet. Ferner sind die erste und die zweite Stufe derart gestaltet, dass der wenigstens eine erste Arbeitsraum und der wenigstens eine zweite Arbeitsraum derart voneinander räumlich getrennt sind, dass die Drehkolbenmaschine mehrstufig oder mehrflutig betreibbar ist.

Durch die Trennung des wenigstens einen ersten Arbeitsraums von dem wenigstens einen zweiten Arbeitsraum mittels der Stufe ist es möglich, ein zu transportierendes Medium entweder mehrstufig oder mehrflutig zu befördern. Ein mehrflutiger Betrieb bedeutet, dass das zu transportierende Medium in einen ersten Volumenstrom und einen zweiten Volumenstrom aufgespalten wird, wobei der erste Volumenstrom dem wenigsten einen ersten Arbeitsraum und der zweite Volumenstrom dem wenigsten einen zweiten Arbeitsraum zugeführt wird. In der Regel werden diese beiden Volumenströme nach Erreichen der maximalen Druckerhöhung durch die Drehkolbenmaschine am Austritt wieder zusammengeführt. Ein mehrstufiger Betrieb bedeutet, dass ein Volumenstrom des zu transportierenden Mediums dem wenigsten einen ersten Arbeitsraum zugeführt wird, durch den der Druck des Mediums erhöht wird. Anschließend wird dieses vorverdichtete Medium dem wenigsten einen zweiten Arbeitsraum zugeführt, der den Druck des zu transportierenden Mediums nochmals erhöht. Somit kann die mittels dem wenigsten einen ersten Arbeitsraum erfolgte Druckerhöhung als erste Stufe und die mittels dem wenigsten einen zweiten Arbeitsraum erfolgte weitere Druckerhöhung als zweite Stufe angesehen werden.

Die den wenigsten einen ersten Arbeitsraum von dem wenigsten einen zweiten Arbeitsraum trennende Stufe verhindert, dass sich ein in dem wenigsten einen ersten Arbeitsraum befindendes Medium mit einem sich in dem wenigsten einen zweiten Arbeitsraum befindenden Medium austauscht.

In einem weiteren Ausführungsbeispiel der Erfindung sind eine erste Außenkontur der ersten Stufe und eine zweite Außenkontur der zweiten Stufe je als ein Kugelring ausgebildet, wobei beide Kugelringe einen gemeinsamen Mittelpunkt aufweisen. Hierbei kann die erste Außenkontur und die zweite Außenkontur voneinander vorbestimmt beabstandet sein.

Die kugelringförmige Ausgestaltung der Stufen kann bewirken, dass der Rotor und der dem Rotor gegenüber um einen vorbestimmten Winkel ausgelenkte Gegenrotor um ihre jeweilige Drehachse rotieren können, ohne dass die Berührung der beiden Kugelringe zueinander unterbrochen wird. Ferner kann durch die kugelringförmige Ausgestaltung der Stufen bewirkt werden, dass während des Rotierens ein vorbestimmter Abstand der Kugelringe zueinander nicht verändert wird. Zusätzlich kann durch die Kugelringe vermieden werden, dass es zu einem Druckausgleich zwischen dem mittels dem wenigsten einen ersten Arbeitsraum zu verdichtenden Medium und dem mittels dem wenigsten einen zweiten Arbeitsraum zu verdichtenden Medium entlang der Stufe kommt.

In einem weiteren Ausführungsbeispiel der Erfindung nimmt ein Gehäuse der Drehkolbenmaschine den Rotor und den Gegenrotor auf, derart, dass der Rotor und der Gegenrotor drehbar geführt sind. Das Gehäuse weist eine Innenwandung auf, die einer kugelförmigen Außenkontur der Rotoren derart nachgebildet ist, dass der Rotor und/oder der Gegenrotor die Innenwandung berühren oder vorbestimmt zur Innenwandung beabstandet sind, wobei die Innenwandung einen fünften Mittelpunkt aufweist, der mit einem gemeinsamen Mittelpunkt zusammenfällt.

Insbesondere bei der Verwendung von schnell laufenden Rotoren in Verbindung mit einer Förderung von nicht schmierenden Medien ist möglicherweise ein Spalt zwischen den einzelnen Rotoren und der Innenwandung umlaufend einzuhalten, damit sich Rotoren und Innenwandung nicht berühren. Eine solche Berührung könnte zu einer Beschädigung der Rotoren oder Innenwandung führen oder auch zu einem Überhitzen der Bauteile aufgrund der Reibung. Der Spalt sollte jedoch so gering als möglich gewählt sein, da er eine Leckage für das zu fördernde Medium bilden und damit den Wirkungsgrad der Drehkolbenmaschine negativ beeinflussen kann. Die kugelförmige Ausgestaltung der Innenwandung im Bereich der Rotoren kann dazu dienen, dass bei einem Rotieren dieser Rotoren der Spalt gleichmäßig an allen Punkten eingehalten werden kann.

In Betriebsstellung der Drehkolbenmaschine laufen durch den gemeinsamen Mittelpunkt die Verlängerungen von Mantellinien der Laufflächen der Zähne der ersten, zweiten, dritten und vierten Verzahnung. Mit dem gemeinsamen Mittelpunkt fallen die Mittelpunkte der kreisringförmig gestalteten ersten und zweiten Stufe zusammen. Ferner ist ein Mittelpunkt der kugelförmigen Außenkontur der Rotoren deckungsgleich mit dem gemeinsamen Mittelpunkt. Ferner weist der Rotor auf seiner dem Gegenrotor zugewandten Seite um seine Drehachse eine Kugelpfanne mit einem Mittelpunkt auf, wobei dieser Mittelpunkt ebenfalls mit dem gemeinsamen Mittelpunkt zusammenfällt. Weiterhin weist der Gegenrotor um seine Drehachse eine kugelringförmige Stützfläche auf, wobei ein Mittelpunkt der kugelringförmigen Stützfläche ebenfalls mit dem gemeinsamen Mittelpunkt zusammenfällt. Ein Steuerbolzen weist an seiner dem Rotor zugewandten Stirnseite eine halbkugelförmige Ausgestaltung auf, wobei ein Mittelpunkt der halbkugelförmigen Ausgestaltung ebenfalls mit dem gemeinsamen Mittelpunkt zusammenfällt. Angemerkt sei, dass der erste Mittelpunkt des ersten Kreisringes, der zweite Mittelpunkt des zweiten Kreisringes, der dritte Mittelpunkt des dritten Kreisringes und der vierte Mittelpunkt des vierten Kreisringes nicht mit dem gemeinsamen Mittelpunkt zusammenfallen.

In einem weiteren Ausführungsbeispiel der Erfindung ist das Gehäuse der Drehkolbenmaschine mit einem Deckel drehfest verschlossen, wobei der Deckel einen Steuerbolzen aufweist und wobei der Steuerbolzen mit dem Deckel drehfest verbunden ist.

Mittels des Steuerbolzens kann das gasförmige oder flüssige Medium derart gesteuert werden, dass es dem wenigsten einen zweiten Arbeitsraum zugeführt und/oder von diesem abgeführt werden kann. Hierzu kann der Steuerbolzen beispielsweise über außen liegende Nuten verfügen, über die das Medium geführt wird. In der Regel wird sich der Steuerbolzen entlang der Drehachse des Gegenrotors erstrecken. Die drehfeste Verbindung gegenüber dem Gehäuse kann bewirken, dass der Eintritt und/oder der Austritt des Mediums immer an der gleichen Stelle bezogen auf das Gehäuse erfolgen. So kann sichergestellt werden, dass sich beispielsweise der von dem wenigstens einen zweiten Arbeitsraum abgeführte Volumenstrom nicht aufgrund einer Veränderung des Eintritts und/oder Austritts relativ zum Gehäuse ändert. Eine Änderung beispielsweise des Eintritts relativ zum Gehäuse führt zu einer Veränderung des von dem wenigstens einen zweiten Arbeitsraum aufzunehmenden Volumen. In der Regel wird bei der Benutzung eines Steuerbolzens mit außen liegenden Nuten das Gehäuse in Kammern unterteilt sein, in denen sich das oder die Medien mit unterschiedlichen Drücken befinden.

In einem weiteren Ausführungsbeispiel der Erfindung sind das Gehäuse und der Deckel gegenüber einem zu transportierenden Medium dicht.

Somit kann zum einen das in der Drehkolbenmaschine zu verdichtende Medium nicht ungewollt nach außen dringen und dadurch die Druckverhältnisse innerhalb der Drehkolbenmaschine verändern. Andererseits kann durch eine mediendichte Verbindung des Deckels mit dem Gehäuse auch sichergestellt werden, dass ein das Gehäuse umgebendes Medium nicht in die Drehkolbenmaschine eindringen kann.

In einem weiteren Ausführungsbeispiel der Erfindung weist der Steuerbolzen der Drehkolbenmaschine einen ersten innenliegenden Steuerkanal und/oder einen zweiten innenliegenden Steuerkanal auf, wobei der erste innenliegende Steuerkanal eine zweite Eintrittssteuerung und der zweite innenliegende Steuerkanal eine zweite Austrittssteuerung aufweisen, so dass ein zu transportierendes Medium dem wenigstens zweiten Arbeitsraum mittels der zweiten Eintrittssteueröffnung zuführbar und/oder das zu transportierende Medium aus dem wenigstens einen zweiten Arbeitsraum mittels der zweiten Austrittssteuerung abführbar ist.

Durch eine derartige Gestaltung des Steuerbolzens mit innenliegenden Steuerkanälen kann auf eine Unterteilung des Gehäuses in Kammern verzichtet werden. Diese innenliegenden Steuerkanäle bewirken eine einfache Zufuhr des Mediums zu und/oder Abfuhr des Mediums aus dem wenigstens einen zweiten Arbeitsraum. Bei einer mehrflutigen Ausgestaltung ist der erste innenliegende Steuerkanal mit dem Austritt des wenigstens einen ersten Arbeitsraumes verbunden. Bei einer mehrflutigen Ausführung wird mittels des ersten innenliegenden Steuerkanals ein zweiter Volumenstrom dem wenigstens einen zweiten Arbeitsraum zugeführt und dieser zweite Volumenstrom mittels des zweiten innenliegenden Steuerkanals aus dem wenigstens einen zweiten Arbeitsraum abgeführt. In der Regel ist der zweite Volumenstrom unabhängig von einem ersten Volumenstrom, der dem wenigstens einen ersten Arbeitsraum zugeführt wird.

In einer weiteren Ausgestaltung der Erfindung weist der Deckel eine erste Öffnung auf, um ein zu verdichtendes Medium dem wenigstens einen ersten Arbeitsraum und/oder dem wenigstens einen zweiten Arbeitsraum zuzuführen. Weiterhin weist der Deckel eine zweite Öffnung auf, um das verdichtete Medium aus dem wenigstens einen ersten Arbeitsraum und/oder dem wenigstens einen zweiten Arbeitsraum abzuführen.

Durch eine derartige Gestaltung ist es möglich, ein zu verdichtendes Medium in Axialerstreckungsrichtung des Gehäuses dem wenigsten einen ersten Arbeitsraum und/oder dem wenigsten einen zweiten Arbeitsraum zuzuführen. Insbesondere bei der mehrflutigen Ausführung kann der zuzuführende Volumenstrom des Mediums entweder im Gehäuse und/oder im Deckel aufgespalten werden. Somit kann zur Zuführung des Mediums nur eine Eintrittsöffnung erforderlich sein. Auch kann der zuzuführende Volumenstrom auch außerhalb des Gehäuses oder Deckels aufgespalten werden, so dass zwei Eintrittsöffnungen erforderlich sein können. Diese können beispielsweise derart angeordnet werden, dass eine Eintrittsöffnung entlang der Längserstreckungsrichtung des Gehäuses im Deckel und die andere quer zur Längserstreckungsrichtung des Gehäuses angeordnet sind. Auch kann insbesondere bei einer mehrflutigen Ausführung das verdichtete Medium entweder mittels zweier nicht miteinander in Verbindung stehender Kammern oder Kanälen entnommen werden. Andererseits können die beiden Volumenströme bereits im Gehäuse und/oder dem Deckel zusammengeführt werden, so dass die beiden Volumenströme somit nur über eine Austrittsöffnung im Deckel entnommen werden. Insbesondere bei der mehrstufigen Verdichtung ist es möglich, mittels einer Eintrittsöffnung im Deckel das zu verdichtende Medium dem wenigstens einen ersten Arbeitsraum zuzuführen und das auf einen Enddruck verdichtete Medium dem wenigstens einen zweiten Arbeitsraum durch eine Austrittsöffnung im Gehäuse zu entnehmen. Auch ist es möglich, das zu verdichtende Medium radial den Arbeitsräumen zuzuführen und axial zu entnehmen oder umgekehrt.

In einem weiteren Ausführungsbeispiel der Erfindung ist das zu transportierende Medium in einen ersten und einen zweiten Volumenstrom aufgeteilt. Eine erste Eintrittssteueröffnung, mittels derer der erste Volumenstrom dem wenigstens einen ersten Arbeitsraum zuführbar ist, weist ein erstes Ventil auf und/oder eine zweite Eintrittssteueröffnung, mittels derer der zweite Volumenstrom dem wenigstens einen zweiten Arbeitsraum zuführbar ist, weist ein zweites Ventil auf. Hierbei sind das erste und das zweite Ventil eingerichtet, den wenigstens einen ersten Arbeitsraum von dem ersten Volumenstrom und/oder den wenigstens einen zweiten Arbeitsraum von dem zweiten Volumenstrom zu trennen.

Insbesondere bei der mehrflutigen Anwendung können bei einer konstanten Drehzahl des Rotors und Gegenrotors folgende Betriebszustände erzeugt werden. Wenn das erste und das zweite Ventil geöffnet sind, werden mittels des wenigstens einen ersten Arbeitsraumes der erste Volumenstrom und mittels des wenigstens einen zweiten Arbeitsraumes der zweite Volumenstrom verdichtet. Somit entspricht der der Drehkolbenmaschine zugeführte Volumenstrom dem Volumenstrom, der aus der Drehkolbenmaschine austritt. Durch ein Verschließen der ersten Eintrittssteueröffnung mittels des ersten Ventils und ein Öffnen der zweiten Eintrittssteueröffnung mittels des zweiten Ventils wird die Zufuhr des ersten Volumenstroms zu dem wenigstens einen ersten Arbeitsraum unterbunden. Lediglich der zweite Volumenstrom wird dem wenigstens einen zweiten Arbeitsraum zugeführt. Somit wird von der Drehkolbenmaschine auch nur der zweite Volumenstrom abgeführt. Durch ein Verschließen des zweiten Ventils und ein Öffnen des ersten Ventils wird lediglich der erste Volumenstrom durch den wenigstens einen ersten Arbeitsraum verdichtet, so dass von der Drehkolbenmaschine lediglich ein erster Volumenstrom abgeführt wird. Durch ein Schließen des ersten und des zweiten Ventils wird die Zufuhr des ersten und des zweiten Volumenstroms zu beiden Arbeitsräumen unterbunden. Somit verlässt trotz Rotierens des Rotors und des Gegenrotors kein verdichtetes Medium die Drehkolbenmaschine.

In einem weiteren Ausführungsbeispiel der Erfindung ist eine erste Austrittssteueröffnung, mittels derer der erste Volumenstrom aus dem wenigstens einen ersten Arbeitsraum abführbar ist, mittels eines ersten geschlossenen Bypasses mit der ersten Eintrittssteueröffnung verbunden und/oder die zweite Austrittssteueröffnung, mittels derer der zweite Volumenstrom aus dem wenigstens einen zweiten Arbeitsraum abführbar ist, mittels eines zweiten verschlossenen Bypasses mit der zweiten Eintrittssteueröffnung verbunden. Das erste Ventil ist eingerichtet, bei der Trennung des wenigstens einen ersten Arbeitsraumes von dem ersten Volumenstrom den ersten Bypass zu öffnen und/oder das zweite Ventil ist eingerichtet, bei der Trennung des wenigstens einen zweiten Arbeitsraumes von der Zufuhr des zweiten Volumenstroms den zweiten Bypass zu öffnen.

Wenn beispielsweise die Zufuhr des ersten Volumenstroms zu dem wenigstens einen ersten Arbeitsraum mittels des ersten Ventils unterbrochen ist, wird durch die Drehkolbenmaschine durch das Rotieren des Rotors und des Gegenrotors versucht, an der ersten Eintrittssteueröffnung durch den sich öffnenden wenigstens einen Arbeitsraum ein erstes Medium aus dem ersten Volumenstrom anzusaugen und durch den sich schließenden wenigstens einen ersten Arbeitsraum an der ersten Austrittssteueröffnung dieses erste Medium abzuführen. Da jedoch kein erstes Medium nachfließt, bewegt die Drehkolbenmaschine ausschließlich das sich bereits in dem wenigstens einen ersten Arbeitsraum befindende erste Medium. Es entsteht insbesondere an der Eintrittssteueröffnung durch ein sich Öffnen des wenigstens einen ersten Arbeitsraums und ein damit verbundenes versuchtes Ansaugen ein Unterdruck im Bereich der Eintrittssteueröffnung, der sich in einem erhöhten Drehwiderstand der Rotoren äußert. Wenn die Rotoren nicht radial gelagert wären, würden sich die Rotoren an der ersten Eintrittssteueröffnung ansaugen. Um diesen erhöhten Widerstand, der den Wirkungsgrad der Drehkolbenmaschine negativ beeinflussen kann, weitestgehend zu minimieren, ist in vorteilhafter Weise bei einer Unterbindung der Zufuhr des ersten Volumenstroms durch das erste Ventil die erste Eintrittssteueröffnung mittels des ersten Bypasses mit der ersten Austrittssteueröffnung verbunden. Somit kommt es zu einem Druckausgleich zwischen der ersten Eintrittssteueröffnung und der ersten Austrittssteueröffnung. Somit wird das sich in dem wenigstens einen ersten Arbeitsraum befindliche erste Medium an der ersten Austrittssteueröffnung dem ersten Bypass zugeführt, um anschließend dieses erste Medium aus dem Bypass dem sich öffnenden wenigstens einen ersten Arbeitsraum zuzuführen. Somit wird durch ein Rotieren der Rotoren das in dem wenigstens einen ersten Arbeitsraum verbliebene erste Medium im Kreis zwischen der erster Austrittsöffnung, dem erstem Bypass, der erster Eintrittsöffnung und dem wenigstens einen ersten Arbeitsraum bewegt. In vorteilhafter Weise wird der erste Bypass dann geöffnet, wenn das erste Ventil die Zufuhr des ersten Volumenstroms unterbricht. Diese dargestellte Funktionsweise gilt entsprechend für den wenigstens einen zweiten Arbeitsraum in Verbindung mit einem aus dem zweiten Volumenstrom stammenden zweiten Medium, dem zweiten Ventil, der zweiten Eintrittsöffnung, der zweiten Austrittsöffnung sowie dem zweiten Bypass.

In einem weiteren Ausführungsbeispiel der Erfindung weist das Gehäuse der Drehkolbenmaschine eine erste Austrittsöffnung auf, die mit einem Mittelraum verbunden ist. Die erste Austrittsöffnung ist derart eingerichtet, das durch den wenigstens einen ersten Arbeitsraum vorverdichtete Medium aufzunehmen und dem Mittelraum zuzuführen, wobei aus dem Mittelraum das vorverdichtete Medium dem wenigstens einen zweiten Arbeitsraum zum weiteren Verdichten zugeführt wird.

Mit anderen Worten ausgedrückt wird das Medium, das durch den wenigstens einen ersten Arbeitsraum vorverdichtet worden ist, in einer Überströmkammer, die hier als Mittelraum bezeichnet ist, abgelegt. Dieser Mittelraum kann sich innerhalb oder außerhalb des Gehäuses befinden. Das vorverdichtete Medium wird aus dem Mittelraum dem ersten innenliegenden Steuerkanal des Steuerbolzens zugeführt und über die zweite Eintrittssteueröffnung an den wenigstens einen zweiten Arbeitsraum übergeben. Durch den wenigstens einen zweiten Arbeitsraum wird das vorverdichtete Medium auf seinen endgültigen Druck verdichtet und mittels der zweiten Austrittssteueröffnung und dem sich daran anschließenden zweiten innenliegenden Steuerkanal entnommen.

In einem weiteren Ausführungsbeispiel der Erfindung ist die erste Austrittsöffnung in der Innenwandung des Gehäuses der Drehkolbenmaschine als Vertiefung ausgestaltet. Der Mittelraum ist in dem Deckel ausgestaltet, wobei der Mittelraum mit dem ersten innen liegenden Steuerkanal verbunden ist. Der Deckel weist eine Austrittsöffnung auf, die mit dem zweiten innenliegenden Steuerkanal verbunden ist

Durch die Integration der Austrittsöffnung in der Innenwandung sowie der Ausgestaltung des Mittelsraums in dem Deckel als einfache Aussparung wird in der Drehkolbenmaschine auf weitere Bauteile verzichtet. Auch werden keine zusätzlichen Räume außerhalb des Gehäuses benötigt.

In einem weiteren Ausführungsbeispiel der Erfindung werden zwischen Rotor und Gegenrotor weitere von dem wenigsten einen ersten und zweiten Arbeitsraum getrennte Arbeitsräume durch weitere Verzahnungen geschaffen. Durch Schaffung weiterer Arbeitsräume kann bei einer kompakten Ausgestaltung des Gehäuses und nur eines Rotors und eines Gegenrotors entweder das zugeführte Medium noch höher verdichtet werden und/oder ein größerer Volumenstrom mittels der Drehkolbenmaschine durchgesetzt werden, als dies mit nur dem wenigsten einen ersten und zweiten Arbeitsraum möglich wäre. Insbesondere bei einem mehrflutigen Betrieb kann mittels Schaltventile der von der Drehkolbenmaschine abgeführte Volumenstrom durch Absperren wenigstens eines der den Arbeitsräumen zugeführten oder von den Arbeitsräumen abgeführten Volumenströme bei konstanter Drehzahl der Rotor-Gegenrotor-Anordnung stufenweise variiert werden.

In einem weiteren Ausgestaltungsbeispiel der Erfindung sind der Rotor und der Gegenrotor mehrteilig ausgeführt. Somit kann für die Verzahnungen ein anderer Werkstoff gewählt werden, als dies für beispielsweise in Lagern aufzunehmende Achsen des Rotors und/oder des Gegenrotors notwendig wäre.

In einem weiteren Ausführungsbeispiel der Erfindung wird das zu verdichtende Medium zuerst dem wenigstens einen zweiten Arbeitsraum zugeführt, bevor es in dem wenigsten einen zweiten Arbeitsraum weiter verdichtet wird.

In einem weiteren Ausführungsbeispiel der Erfindung weist der Deckel eine Austrittsöffnung auf, die mit dem zweiten innen liegenden Steuerkanal verbunden ist.

Es wird angemerkt, dass Gedanken zu der Erfindung hierin im Zusammenhang mit einer Drehkolbenmaschine mit einem Rotor und einem Gegenrotor beschrieben sind. Einem Fachmann ist hierbei klar, dass die einzelnen beschriebenen Merkmale auf verschiedene Weise miteinander kombiniert werden können, um so auch zu anderen Ausgestaltungen der Erfindung zu gelangen.

Ausführungsformen der Erfindung werden nachfolgend mit Bezug auf die beigefügten Figuren beschrieben. Die Figuren sind lediglich schematisch und nicht maßstabsgetreu.

### Kurze Beschreibung der Zeichnungen

- Figur 1: zeigt eine 3-D-Ansicht eines Rotors und eines Gegenrotors in Betriebsstellung,
- Figur 2: zeigt den Rotor in Aufsicht auf seine Verzahnungen,
- Figur 3: zeigt im Längsschnitt eine Drehkolbenmaschine,
- Figur 4: zeigt eine 3-D-Ansicht eines Gehäuse für eine mehrstufige Anwendung,
- Figur 5: zeigt eine Explosionszeichnung einer mehrstufigen Verdichtereinheit,
- Figur 6: zeigt einen Längsschnitt der Komponenten aus Figur 5,
- Figur 7: zeigt einen Längsschnitt durch eine mehrflutige Verdichtereinheit,
- Figur 8: zeigt von Figur 7 das Gehäuse und einen Steuerbolzen im Röntgenblick,
- Figur 9: zeigt eine Explosionszeichnung einer mehrflutigen Verdichtereinheit und
- Figur 10: zeigt einen Längsschnitt durch die Komponenten aus Figur 9.

### Detaillierte Beschreibung beispielhafter Ausführungsformen

An dieser Stelle soll vorausgeschickt werden, dass gleiche Teile in den einzelnen Figuren gleiche Bezugszeichen aufweisen.

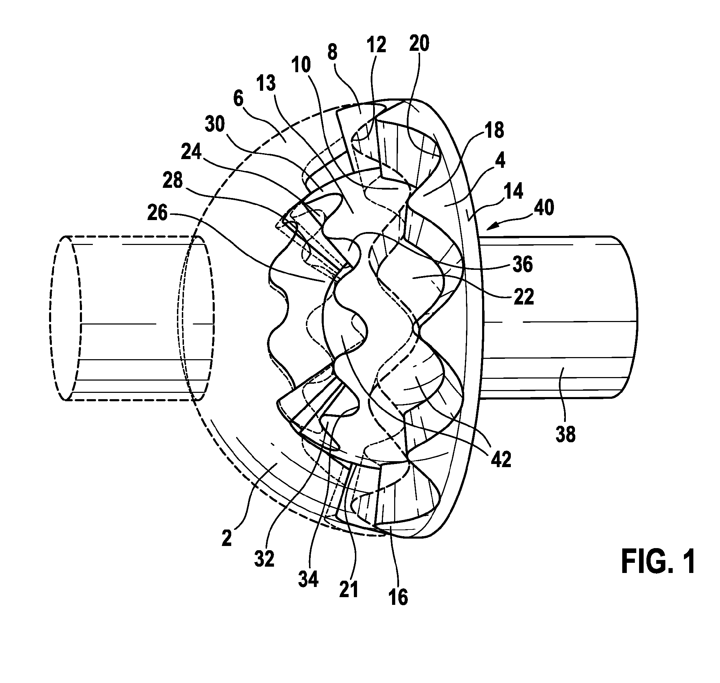

Figur 1 zeigt eine Rotor 2-Gegenrotor 4-Anordnung aus einer Drehkolbenmaschine, die als Pumpe, Verdichter oder Motor arbeitet, wobei der Gegenrotor 4 dem Rotor 2 gegenüberliegend angeordnet ist. Zur besseren Übersicht ist der Rotor mittels durchgezogener Linien und der Gegenrotor 4 mittels gestrichelter Linien dargestellt. An dem Rotor 2 ist eine erste Stirnfläche 6 mit einer ersten Verzahnung 8 ausgebildet. Die erste Verzahnung 8 wird durch mindestens einen ersten Zahn 10 und eine erste Zahnlücke 12 gebildet. Der Gegenrotor 4 bildet an seiner zweiten Stirnfläche 14 eine zweite Verzahnung 16 aus. Die zweite Verzahnung 16 wird durch wenigstens einen zweiten Zahn 18 und eine zweite Zahnlücke 20 gebildet. Die beiden Verzahnungen 8, 16 stehen derart miteinander in Eingriff, dass durch Kämmen der ersten Zähne 10 der ersten Verzahnung 8 und der zweiten Zähne 18 der zweiten Verzahnung 16 erste Arbeitsräume 22 ausgebildet werden. Durch die ersten Arbeitsräume 22 gebildete Volumina werden durch das Kämmen der Zähne 10, 18 verändert. Zu berücksichtigen ist, dass die Anzahl der ersten Zähne 10 der ersten Verzahnung 8 von der Anzahl der zweiten Zähne 18 der zweiten Verzahnung 16 um einen Zahn differiert. In dem hier vorliegenden Fall weist die zweite Verzahnung 16 einen Zahn 18 mehr auf als die erste Verzahnung 8. An der ersten Stirnfläche 6 des Rotors 2 ist eine von der ersten Verzahnung 8 durch eine erste Stufe 13 räumlich getrennte dritte Verzahnung 24 ausgebildet. Die dritte Verzahnung 24 ist durch wenigstens einen dritten Zahn 26 und wenigstens eine dritte Zahnlücke 28 gebildet. An der zweiten Stirnfläche 14 des Gegenrotors 4 ist eine von der zweiten Verzahnung 16 durch eine zweite Stufe 21 räumlich getrennte vierte Verzahnung 30 ausgebildet. Die vierte Verzahnung 30 wird durch wenigstens einen vierten Zahn 32 und wenigstens eine vierte Zahnlücke 34 gebildet. Die dritte 24 und vierte Verzahnung 30 stehen miteinander derart in Eingriff, dass durch Kämmen der dritten Zähne 26 der dritten Verzahnung 24 und der vierten Zähne 32 der vierten Verzahnung 30 zweite Arbeitsräume 36 ausgebildet werden. Hierbei werden durch die zweiten Arbeitsräume 36 gebildete Volumina durch das Kämmen der Zähne 26, 32 verändert. Auch hier differiert die Anzahl der dritten Zähne 26 der dritten Verzahnung 24 von der Anzahl der vierten Zähne 32 der vierten Verzahnung 30. In dem hier vorliegenden Ausführungsbeispiel weist die vierte Verzahnung 30 einen Zahn mehr auf als die dritte Verzahnung 24. Es ist festzuhalten, dass die Anzahl der ersten Zähne 10 der ersten Verzahnung 16 bzw. die Anzahl der zweiten Zähne 18 der zweiten Verzahnung 16 unabhängig von der Anzahl der dritten Zähne 26 der dritten Verzahnung 24 bzw. der Anzahl der vierten Zähne 32 der vierten Verzahnung 30 ist. Wenn die Anzahl der Zähne 10, 26 der ersten 16 und der dritten Verzahnung 24 und/oder die Anzahl der Zähne 18, 32 der zweiten 16 und der vierten Verzahnung 30 unterschiedlich gewählt sind, wird in der Regel der Rotor 2 und/oder der Gegenrotor 4 mindestens zweiteilig ausgeführt sein, da zwischen den Verzahnungen unterschiedliche Übersetzungsverhältnisse vorliegen. In der Figur 1 ist deutlich zu sehen, dass durch ein Rotieren von Rotor und Gegenrotor gleichzeitig erste Arbeitsräume 22 und zweite Arbeitsräume 36 gebildet werden. Weiterhin ersichtlich in Figur 1 ist ein Steuerbolzen 38, bei dem an seiner den beiden Rotoren 2, 4 zugewandten Stirnfläche 40 eine Halbkugel 42 ausgeformt ist, die sowohl in den Rotor 2 als auch in den Gegenrotor 4 hineinragt.

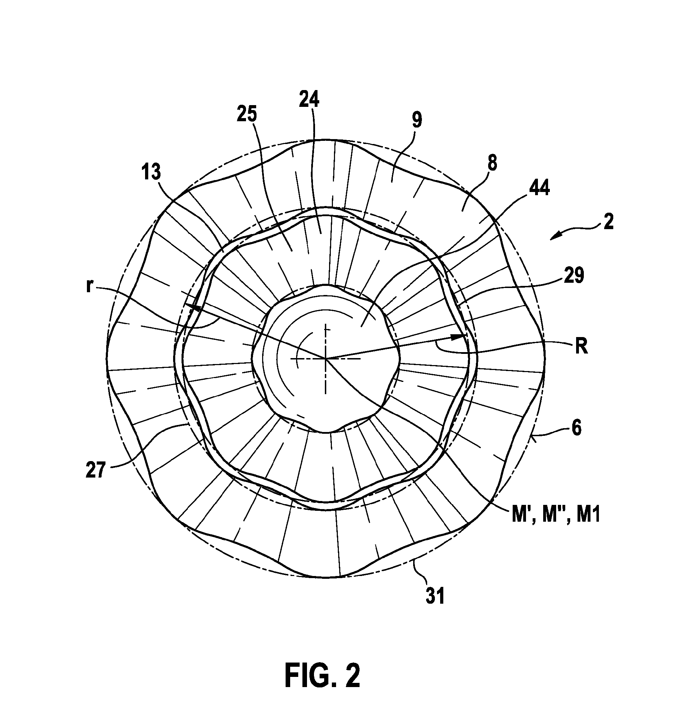

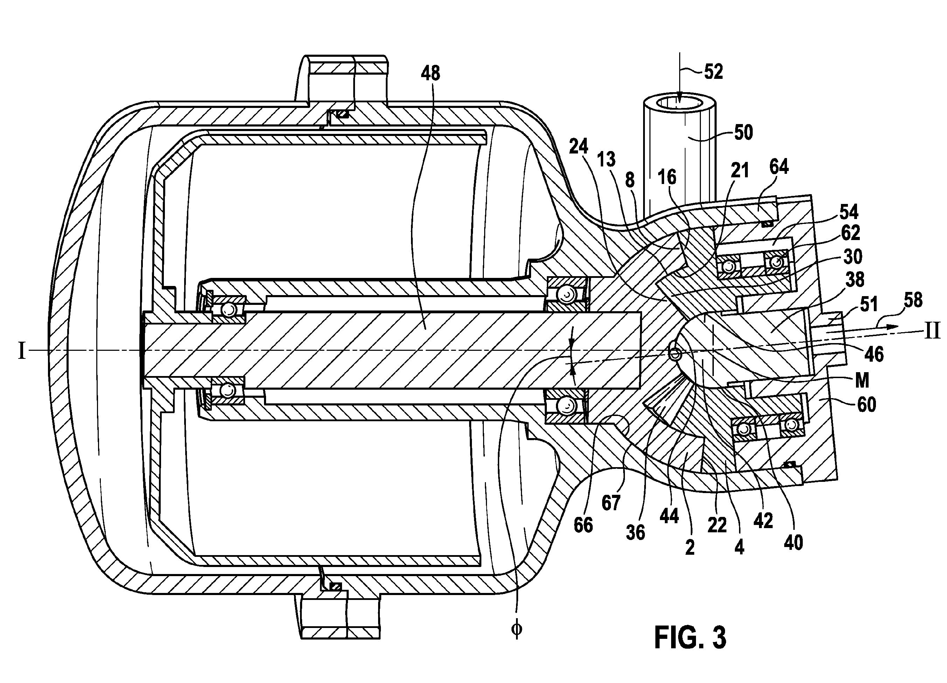

Figur 2 zeigt den Rotor 2 in Aufsicht auf seine Verzahnungen 8, 24. Hierbei ist die erste Verzahnung 8 als ein erster Außenring 9 ausgebildet und die dritte Verzahnung 24 ist als ein erster Innenring 25 ausgebildet. Der erste Außenring 9 und der erste Innenring 25 sind in durchgezogenen Linien dargestellt. Die besondere Form des ersten Außenrings 9 bzw. des ersten Innenrings 25 ergibt sich dadurch, dass sich die erste 8 bzw. die dritte Verzahnung 24, jede als Zykloiden- oder Trochoidenverzahnung ausgestaltet, ringförmig um einen Kugelabschnitt, auch Kugelkalotte genannt, erstreckt und somit jede Innenseite der Verzahnungen 8, 24 von einem inneren Kugelabschnitt begrenzt wird. Hierbei weist der innere Kugelabschnitt des Innenrings 25 einen geringeren Durchmesser als der innere Kugelabschnitt des Außenringes 9 auf. Wie in Figur 3 möglicherweise besser ersichtlich ist, handelt es sich bei dem inneren Kugelabschnitt des Außenrings 9 um die erste Stufe 13 und bei dem inneren Kugelabschnitt des Innenrings 25 um eine die Halbkugel 42 umschließende und als Kugelpfanne ausgebildete Stützfläche 44. Zusätzlich begrenzt die erste Stufe 13 eine Außenseite des ersten Innenrings 25. Eine Außenseite 31 des ersten Außenrings 9 wird von einem äußeren Kugelabschnitt begrenzt. In dem hier beschriebenen Ausführungsbeispiel fallen die Mittelpunkte aller Kugelabschnitte in einem gemeinsamen Mittelpunkt M zusammen, der in Figur 3 dargestellt ist. Der zweite Außen- und der zweite Innenring des Gegenrotors 4 werden in ähnlicher Weise gebildet. Der erste innere Radius r mit einem ersten Mittelpunkt M' wird gebildet, indem die tiefsten Punkte der ersten Verzahnung 8, also die tiefsten Punkte der Zahnlücken 12, auf ihrer Innenseite durch einen ersten, strichpunktiert dargestellten Kreis 27 miteinander verbunden werden, wobei dessen Radius und Mittelpunkt eben der erste innere Radius r mit dem Mittelpunkt M' ist. Der erste äußere Radius R mit dem dritten Mittelpunkt M" wird gebildet, indem die tiefsten Punkte der dritten Zahnlücken 28 an der Außenseite der dritten Verzahnung 24 durch einen dritten, strichpunktiert dargestellten Kreis 29 verbunden werden, dessen Radius mit Mittelpunkt eben der erste äußere Radius R mit dem dritten Mittelpunkt M" ist. Deutlich sichtbar ist, dass der erste Außenring 9 und der erste Innenring 25 derart konzentrisch auf der ersten Stirnfläche 6 des Rotors 2 angeordnet sind, dass der erste M' und der dritte Mittelpunkt M" zu einem Mittelpunkt M1 zusammenfallen, wobei der erste innere Radius r größer ist als der erste äußere Radius R. Eine Ansicht der zweiten 16 und der vierten Verzahnung 30 des Gegenrotors 4 in Richtung der zweiten Stirnfläche 14 ergibt gegenüber der Figur 2 keine andere Ansicht. Diese Anordnung der Verzahnungen gewährleistet, dass die beiden Rotoren 2, 4 keine einander überlappende Verzahnungen aufweisen. Eine überlappende Verzahnung könnte bei der Montage von Rotoren 2, 4, insbesondere wenn die Verzahnungen einstückig ausgeführt sind, zu einer Beschädigung der Rotoren 2, 4 führen.

Figur 3 zeigt im Längsschnitt die Drehkolbenmaschine. Die hier gezeigte Anordnung eignet sich insbesondere für eine mehrstufige Verdichtung eines zu transportierenden Mediums. Deutlich sichtbar ist, dass der Rotor 2 eine erste Drehachse I und der Gegenrotor 4 eine zweite Drehachse II aufweisen. Hierbei schließen die erste Drehachse I und die zweite Drehachse II einen Winkel ϕ ein, der ungleich 0 Grad ist. Der Halbkugel 42 des Steuerbolzens 38 zugewandt ist an dem Gegenrotor 4 eine kugelringförmige Stützfläche 46 ausgebildet, die der Außenkontur der Halbkugel 42 folgt. Ferner ist ersichtlich, dass die Halbkugel 42 durch den Gegenrotor 4 hindurch in die als Kugelpfanne ausgebildete Stützfläche 44 des Rotors 2 ragt. Ferner ist die erste Verzahnung 8 des Rotors 2 mittels einer ersten Stufe 13 von der dritten Verzahnung 24 räumlich getrennt. Die zweite Verzahnung 16 des Gegenrotors 4 ist durch eine zweite Stufe 21 von der vierten Verzahnung 30 ebenfalls räumlich getrennt. Die räumliche Trennung bedeutet, dass mit einem zweiten Medium gefüllte zweite Arbeitsräume 36 sich nicht über die erste 13 bzw. zweite Stufe 21 mit einem ersten Medium austauschen, welches die ersten Arbeitsräume 22 füllt. Die Rotoren 2, 4 werden mittels einer mit dem Rotor 2 drehfest verbundenen Antriebswelle 48 angetrieben. Die Rotoren 2, 4 sind drehbar in einem Gehäuse 64 gelagert.

Hierbei folgt eine Innenwandung 66 des Gehäuses 64 im Bereich der Rotoren 2, 4 dessen Außenkontur 67. Das Gehäuse 64 ist stirnseitig mittels eines Deckels 60 drehfest und mediumdicht verbunden. Mit dem Deckel 60 ist der Steuerbolzen 38 drehfest verbunden. In dem hier vorliegenden Ausführungsbeispiel ist der Steuerbolzen 38 in den Deckel 60 eingepresst. Weiterhin ersichtlich ist, dass sich der Gegenrotor 4 an einem kombinierten Radial-Axial-Lager 62 abstützt, welches mit dem Deckel 60 verbunden ist. Ferner ist in dem Deckel 60 ein Mittelraum 54 ersichtlich. In Betriebsstellung der Drehkolbenmaschine verlaufen durch einen gemeinsamen Mittelpunkt M Verlängerungen von Mantellinien der Laufflächen der Zähne 10, 18, 24, 32 und Zahnlücken 12, 20, 28, 34 jeder Verzahnung 8, 16, 24, 30. Mit dem gemeinsamen Mittelpunkt M fallen die Mittelpunkte der kreisförmig gestalteten ersten 13 und zweiten Stufe 21 zusammen. Ferner fällt ein Mittelpunkt der kugelförmigen Außenkontur 67. der Rotor 2-Gegenrotor 4-Anordnung sowie ein dieser Außenkontur 67 folgender kugelförmiger Teilbereich der Innenwandung 66 ebenfalls mit dem gemeinsamen Mittelpunkt M zusammen. Auch treffen ein Mittelpunkt der Halbkugel 42 des Steuerbolzens 38, ein Mittelpunkt der kugelringförmigen Stützfläche 46 des Gegenrotors 4 und ein Mittelpunkt der als Kugelpfanne ausgebildeten Stützfläche 44 des Rotors 2 mit dem gemeinsamen Mittelpunkt M zusammen. Radial an dem Gehäuse 64 befindet sich ein Eintrittsstutzen 50. Konzentrisch zu der zweiten Drehachse II des Gegenrotors 4 befindet sich am Deckel 60 ein Austrittsstutzen 51.

Ein zu verdichtendes Medium tritt in den Eintrittsstutzen 50 entlang des Pfeiles 52 in das Gehäuse 64 ein und wird den ersten Arbeitsräumen 22, die durch ein Kämmen der ersten Zähne 10 der ersten Verzahnung 8 mit den zweiten Zähnen 18 der zweiten Verzahnung 16 gebildet werden, zugeführt. Durch die sich verkleinernden Arbeitsräume 22 wird das Medium verdichtet und in diesem vorverdichteten Stadium im Mittelraum 54 abgelegt. Das vorverdichtete Medium wird den zweiten Arbeitsräumen 36, die durch ein Kämmen der dritten Zähne 26 der dritten Verzahnung 24 und der vierten Zähne 32 der vierten Verzahnung 30 gebildet werden, zugeführt. Durch die sich verkleinernden zweiten Arbeitsräume 36 wird das vorverdichtete Medium bis zu seinem Enddruck weiter verdichtet. Das endverdichtete Medium wird anschließend über den Steuerbolzen 38 dem Austrittsstutzen 51 zugeführt. Anschließend wird das endverdichtete Medium entlang eines Pfeils 58 einem hier nicht dargestellten Verbraucher zugeführt.

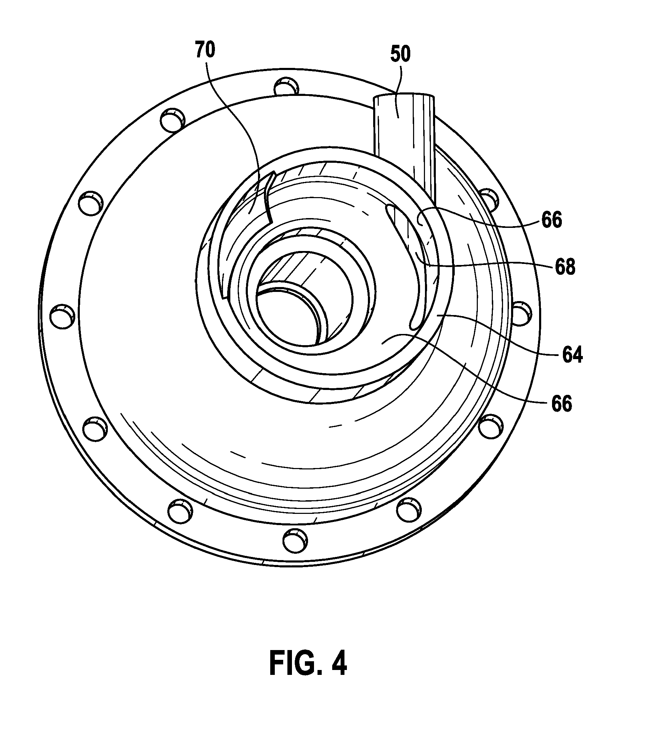

Figur 4 zeigt die Innenansicht eines Gehäuses für eine mehrstufige Anwendung. Dargestellt ist hier eine dem Eintrittsstutzen 50 zugeordnete an der Innenwandung 66 des Gehäuses 64 ausgeformte erste Eintrittssteueröffnung 68. Der ersten Eintrittssteueröffnung 68 gegenüberliegend ist als Vertiefung in der Innenwandung 66 eine erste Austrittssteueröffnung 70 ausgebildet.

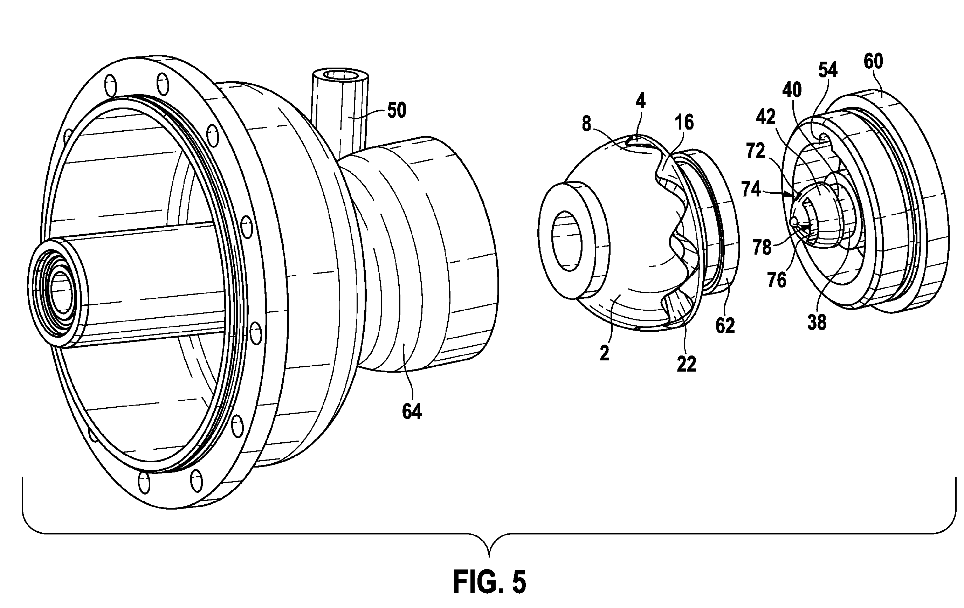

Figur 5 zeigt eine Explosionszeichnung der mehrstufigen Verdichtereinheit. Deutlich erkennbar sind an dem Steuerbolzen 38 ein erster innenliegender Kanal 72 mit einer ersten Eintrittssteueröffnung 74 und ein zweiter innen liegender Kanal 76 mit einer zweiten Austrittssteueröffnung 78. Das in dem Mittelraum 54 vorverdichtete Medium wird dem ersten innenliegenden Kanal 72 zugeführt und über die zweite Eintrittssteueröffnung 74 den zweiten Arbeitsräumen 36. Das auf Enddruck verdichtete Medium wird den zweiten Arbeitsräumen 36 mittels der zweiten Austrittssteueröffnung 78 entnommen und dem zweiten innenliegenden Kanal 76 zugeführt, der mit dem Austrittsstutzen 51 verbunden ist.

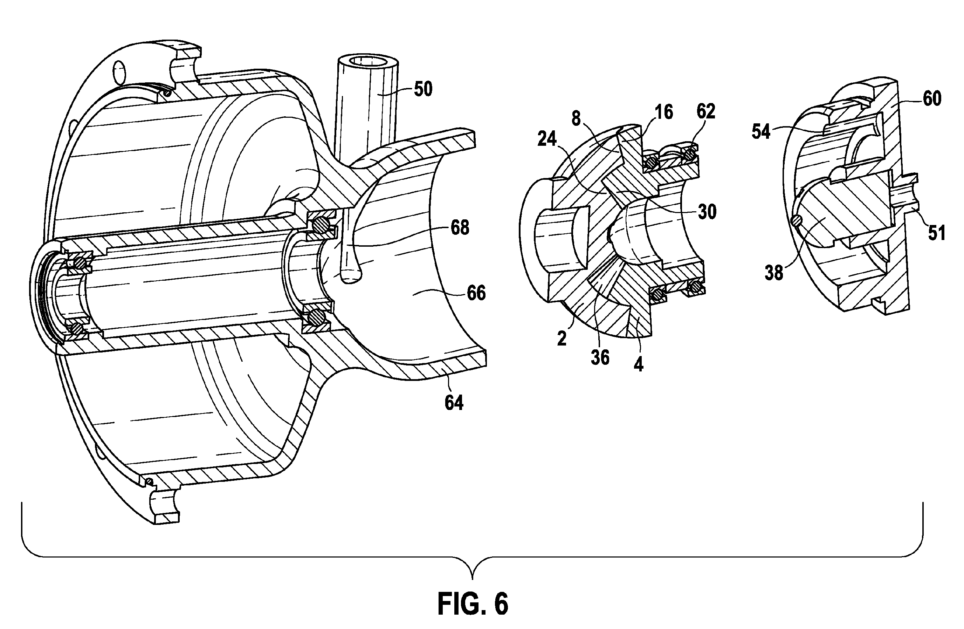

Figur 6 zeigt die in Figur 5 dargestellten Komponenten im Schnitt.

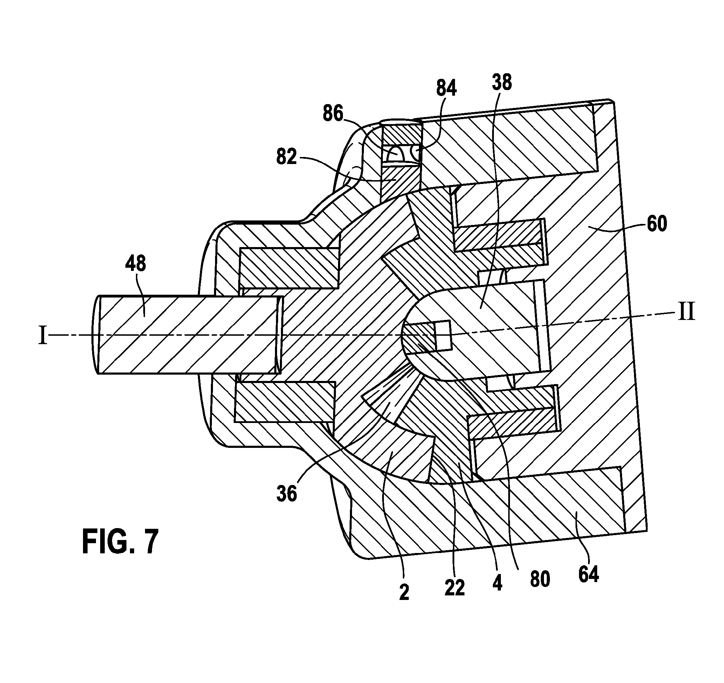

Figur 7 zeigt einen Längsschnitt durch eine mehrflutige Verdichtereinheit. Mehrflutig bedeutet, dass ein Medium in einen ersten Volumenstrom und einem zweiten Volumenstrom aufgeteilt wird, wobei der erste Volumenstrom den ersten Arbeitsräumen 22 und der zweite Volumenstrom den zweiten Arbeitsräumen 36 zugeführt wird. In dem Gehäuse 64 ist ein erstes Ventil 82 und in dem Steuerbolzen 38 ein zweites Ventil 80 angeordnet. Beide Ventile 80, 82 ermöglichen es, die Zufuhr des ersten Volumenstromes zu den ersten Arbeitsräumen 22 und die Zufuhr des zweiten Volumenstromes zu den zweiten Arbeitsräumen 36 zu unterbinden. Somit ist es möglich, bei einer durch die Antriebswelle 48 auf den Rotor aufgebrachten konstanten Drehzahl durch ein Betätigen der Ventile den Volumenstrom zu beeinflussen. Wenn beide Ventile 80, 82 geöffnet sind, verlassen ein erster und ein zweiter Volumenstrom die Rotoren. Wenn das zweite Ventil 82 geschlossen ist und das erste Ventil 80 geöffnet ist, verlässt lediglich der erste Volumenstrom die Rotoren 2, 4. Wenn das erste Ventil 80 geschlossen ist und das zweite Ventil 82 geöffnet ist, verlässt lediglich ein zweiter Volumenstrom die Rotoren 2, 4. Wenn beide Ventile 80, 82 geschlossen sind, wird, obwohl sich die Rotoren 2, 4 drehen, kein Medium transportiert.

In dem Gehäuse 64 ist ein dritter innenliegender Kanal 84 ersichtlich, mittels dem das zu verdichtende Medium den ersten Arbeitsräumen 22 zugeführt wird. Auch sichtbar ist ein vierter innenliegender Kanal 86, der als ein erster Bypass ausgestaltet ist. Dieser im Regelfall geschlossene erste Bypass 86 wird geöffnet, wenn das erste Ventil 82 geschlossen wird, und verbindet die erste Eintrittssteueröffnung 74 mit der ersten Austrittssteueröffnung 78. Dieser erste Bypass 86 sorgt für einen Druckausgleich zwischen den sich an der ersten Eintrittssteueröffnung 74 öffnenden ersten Arbeitsräumen 22, die das Medium ansaugen, und den sich im Bereich der ersten Austrittssteueröffnung 78 schließenden ersten Arbeitsräumen 22, die das Medium herausdrücken. Somit wird das Medium, das sich in den ersten Arbeitsräumen 22 nach dem Schließen des ersten Ventils 82 befindet, dem ersten Bypass 86 im Bereich der ersten Austrittssteueröffnung 78 zugeführt und anschließend dem ersten Bypass 86 im Bereich der ersten Eintrittssteueröffnung 74 wieder entnommen.

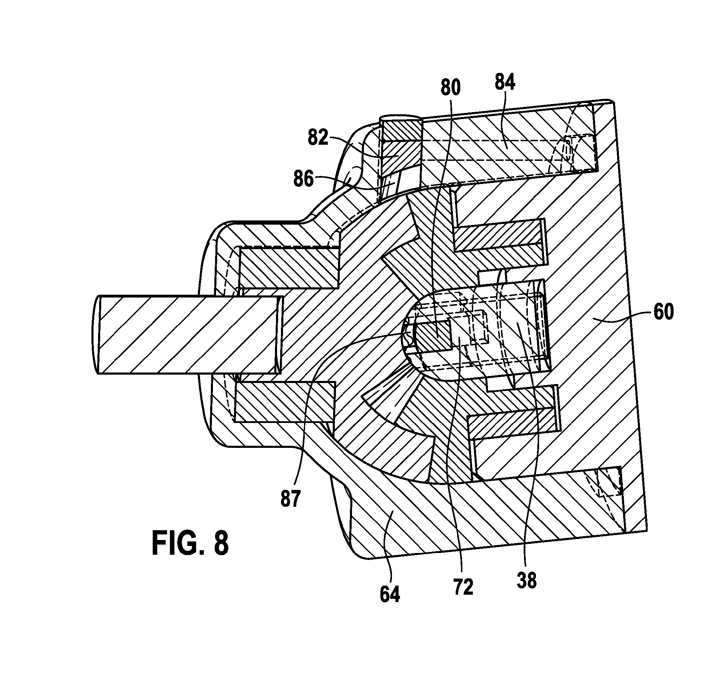

Figur 8 unterscheidet sich von Figur 7 dadurch, dass das Gehäuse 64 und der Steuerbolzen 38 im Röntgenblick dargestellt sind. Der Figur 8 kann entnommen werden, dass das erste Ventil 80 bei der Trennung der zweiten Arbeitsräume 36 von der Zufuhr des zu transportierenden Mediums einen zweiten Bypass 87 öffnet. Dieser Bypass 87 verbindet den ersten innenliegenden Kanal 72 mit dem zweiten innen liegenden Kanal 76. Die Ablaufsteuerung sowie die damit verbundene Funktionalität des ersten Ventils 80 entsprechen der bereits beschriebenen Funktionalität des zweiten Ventils 82.

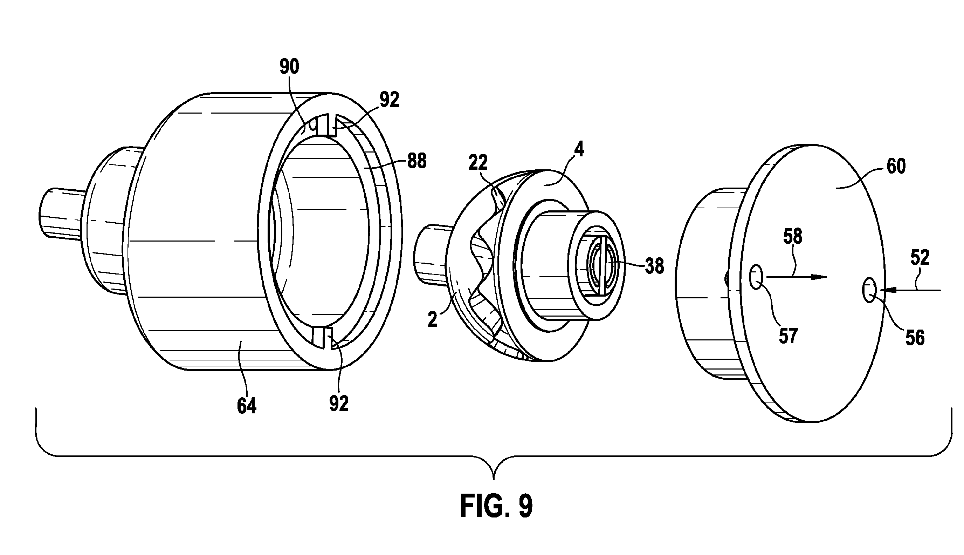

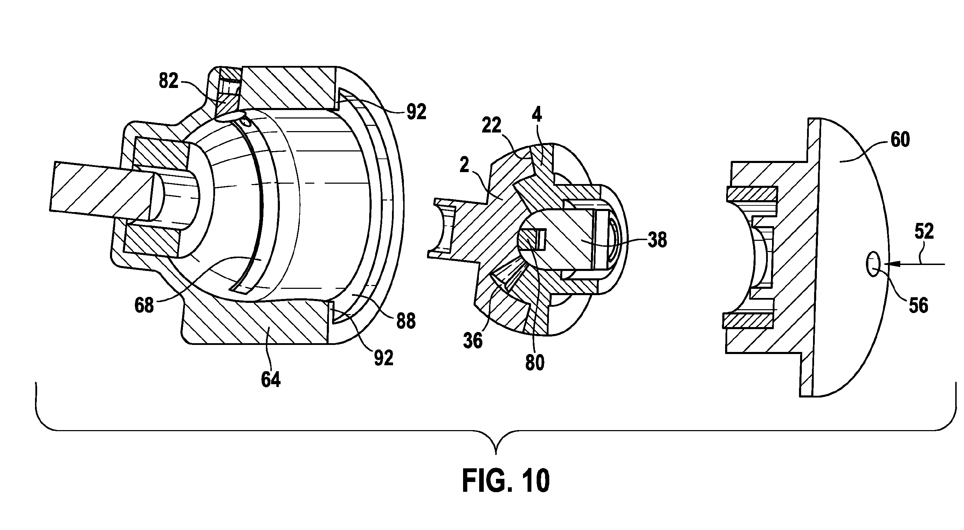

Figur 9 und Figur 10 zeigen eine Explosionszeichnung einer mehrflutigen Verdichtereinheit, wobei Figur 10 die Komponenten der Figur 9 im Längsschnitt zeigt. Hierbei ist zu sehen, dass das zu verdichtende Medium über den Deckel 60 entlang des Pfeils 52, also bezogen auf das Gehäuse 64 in axialer Richtung, über eine erste Öffnung 56 zugeführt und das verdichtete Medium ebenfalls über den Deckel 60 entlang des Pfeils 58 in axialer Richtung über eine zweite Öffnung 57 entnommen wird. Ersichtlich ist ein stirnseitig in dem Gehäuse 64 angebrachter erster Ringkanal 88, von dem das zu verdichtende Medium in einen ersten und einen zweiten Volumenstrom aufgeteilt wird. Der erste Volumenstrom wird den ersten Arbeitsräumen 22 zugeführt. Der zweite Volumenstrom wird den zweiten Arbeitsräumen 36 zugeführt. Von diesem ersten Ringkanal 88 durch zwei einander gegenüberliegender Stege 92 getrennt befindet sich ein zweiter Ringkanal 90, dem das mittels der ersten Arbeitsräume 22 verdichtete Medium des ersten Volumenstroms und dem das mittels der zweiten Arbeitsräume 34 verdichtete Medium des zweiten Volumenstroms zugeführt wird.

Natürlich kann das zu verdichtende Medium zuerst dem wenigstens einen zweiten Arbeitsraum 36 zugeführt werden, bevor es in dem wenigsten einen ersten Arbeitsraum 22 weiter verdichtet wird.

In dem hier gezeigten Ausführungsbeispiel sind das Gehäuse 64, der Deckel 60, der Steuerbolzen 38, der Rotor 2 und der Gegenrotor 4 einteilig ausgeführt. Natürlich können eine oder mehrere dieser Komponenten auch mehrteilig ausgeführt sein. Insbesondere bezüglich des Rotors 2 und des Rotors 4 lassen sich für die Verzahnungen andere Werkstoffe wählen als beispielsweise für die Lageraufnahmen.

## Patentansprüche

1. Drehkolbenmaschine, die als Pumpe, Verdichter oder Motor arbeitet,
- mit einem Rotor (2) und einem Gegenrotor (4), wobei der Gegenrotor (4) dem Rotor (2) gegenüberliegend angeordnet ist,
- wobei der Rotor (2) eine erste Stirnfläche (6) mit einer ersten Verzahnung (8) aufweist, wobei der Gegenrotor (4) eine zweite Stirnfläche (14) mit einer zweiten Verzahnung (16) aufweist und wobei die erste (8) und die zweite Verzahnung (16) je aus zumindest einem Zahn (10, 18) und einer Zahnlücke (12, 20) gebildet sind,
- wobei die Verzahnungen (8, 16) miteinander derart in Eingriff stehen, dass durch Kämmen der Zähne (10) der ersten Verzahnung (8) und der Zähne (18) der zweiten Verzahnung (16) erste Arbeitsräume (22) ausgebildet werden, wobei durch die ersten Arbeitsräume (22) gebildete Volumina durch das Kämmen der Zähne (10, 18) verändert werden,
- wobei der Rotor (2) eine erste Drehachse (I) aufweist, wobei der Gegenrotor (4) eine zweite Drehachse (II) aufweist, wobei die erste Drehachse (I) und die zweite Drehachse (II) einen Winkel (ϕ) einschließen, der ungleich 0° ist,
**dadurch gekennzeichnet, dass**
- die erste Stirnfläche (6) des Rotors (2) eine von der ersten Verzahnung (8) räumlich getrennte dritte Verzahnung (24) aufweist und die zweite Stirnfläche (14) des Gegenrotors (4) eine von der zweiten Verzahnung (16) räumlich getrennte vierte Verzahnung (30) aufweist, wobei die dritte (24) und die vierte Verzahnung (30) je aus mindestens einem Zahn (26, 32) und einer Zahnlücke (28, 34) gebildet sind, wobei die dritte (24) und vierte Verzahnung (30) miteinander derart in Eingriff stehen, dass durch Kämmen der Zähne (26) der dritten Verzahnung (24) und der Zähne (32) der vierten Verzahnung (30) zweite Arbeitsräume (36) ausgebildet werden, wobei durch die zweiten Arbeitsräume (36) gebildete Volumina durch das Kämmen der Zähne (26, 32) verändert werden.

2. Drehkolbenmaschine nach Anspruch 1, **dadurch gekennzeichnet,**
- **dass** die erste Verzahnung (8) in Richtung der ersten Stirnfläche (6) gesehen als ein erster Außenring (9) mit einem ersten Mittelpunkt (M') und einem ersten inneren Radius (r) ausgebildet ist,
- **dass** die dritte Verzahnung (24) in Richtung der ersten Stirnfläche (16) gesehen als ein erster Innenring (25) mit einem dritten Mittelpunkt (M") und einem ersten äußeren Radius (R) ausgebildet ist,
- **dass** der erste (M') und der dritte Mittelpunkt (M") zu einem Mittelpunkt (M1) zusammenfallen, wobei der erste innere Radius (r) gleich oder größer ist als der erste äußere Radius (R),
- **dass** die zweite Verzahnung (16) in Richtung der zweiten Stirnfläche (14) gesehen als ein zweiter Außenring mit einem zweiten Mittelpunkt und einem zweiten inneren Radius ausgebildet ist,
- **dass** die vierte Verzahnung (30) in Richtung der zweiten Stirnfläche (14) gesehen als ein zweiter Innenring mit einem vierten Mittelpunkt und einem zweiten äußeren Radius ausgebildet ist,
- **dass** der zweite und der vierte Mittelpunkt zu einem weiteren Mittelpunkt zusammenfallen, wobei der zweite innere Radius gleich oder größer ist als der zweite äußere Radius.

3. Drehkolbenmaschine nach Anspruch 1 oder 2, **dadurch gekennzeichnet,**
- **dass** quer zur ersten Stirnfläche (6) gesehen die erste Verzahnung (8) und die dritte Verzahnung (24) durch eine erste Stufe (13) beabstandet sind,
- **dass** quer zur zweiten Stirnfläche (14) gesehen die zweite Verzahnung (16) und die vierte Verzahnung (30) durch eine zweite Stufe (21) beabstandet sind,
- **dass** die erste (13) und die zweite Stufe (21) derart gestaltet sind, dass der wenigstens eine erste Arbeitsraum (22) und der wenigstens eine zweite Arbeitsraum (36) derart voneinander räumlich getrennt sind, dass die Drehkolbenmaschine mehrstufig oder mehrflutig betreibbar ist.

4. Drehkolbenmaschine nach einem der vorhergehenden Ansprüche, **dadurch gekennzeichnet, dass** ein Gehäuse (64) den Rotor (2) und den Gegenrotor (4) aufnimmt, derart, dass der Rotor (2) und der Gegenrotor (4) drehbar geführt sind, und dass das Gehäuse (64) eine Innenwandung (66) aufweist, die einer kugelförmigen Außenkontur der Rotoren (2, 4) derart nachgebildet ist, dass der Rotor (2) und/oder der Gegenrotor (4) die Innenwandung (66) berühren oder vorbestimmt zur Innenwandung (66) beabstandet sind, wobei die Innenwandung (66) einen fünften Mittelpunkt aufweist, der mit einem gemeinsamen Mittelpunkt (M) zusammenfällt.

5. Drehkolbenmaschine nach Anspruch 4, **dadurch gekennzeichnet, dass** das Gehäuse (64) mit einem Deckel (60) drehfest verschlossen ist, wobei der Deckel (60) einen Steuerbolzen (38) aufweist und wobei der Steuerbolzen (38) mit dem Deckel (60) drehfest verbunden ist.

6. Drehkolbenmaschine nach Anspruch 5, **dadurch gekennzeichnet, dass** der Steuerbolzen (38) einen ersten innenliegenden Steuerkanal (72) und/oder einen zweiten innenliegenden Steuerkanal (76) aufweist, wobei der erste innenliegende Steuerkanal (72) eine zweite Eintrittssteueröffnung (74) und der zweite innenliegende Steuerkanal (76) eine zweite Austrittssteueröffnung (78) aufweist, so dass ein zu transportierendes Medium dem wenigstens einen zweiten Arbeitsraum (36) mittels der zweiten Eintrittssteueröffnung (74) zuführbar und/oder das zu transportierende Medium aus dem wenigstens einen zweiten Arbeitsraum (36) mittels der zweiten Austrittssteueröffnung (78) abführbar ist.

7. Drehkolbenmaschine nach Anspruch 6, **dadurch gekennzeichnet, dass** das Medium in einen ersten und einen zweiten Volumenstrom aufgeteilt ist, wobei eine erste Eintrittssteueröffnung (68), mittels derer der erste Volumenstrom dem wenigstens einen ersten Arbeitsraum (22) zuführbar ist, ein erstes Ventil (82) aufweist und/oder wobei die zweite Eintrittssteueröffnung (74), mittels derer der zweite Volumenstrom dem wenigstens einen zweiten Arbeitsraum (36) zuführbar ist, ein zweites Ventil (80) aufweist, wobei das erste (82) und das zweite Ventil (80) eingerichtet sind, den wenigstens einen ersten Arbeitsraum (22) von dem ersten Volumenstrom und/oder den wenigstens einen zweiten Arbeitsraum (36) von dem zweiten Volumenstrom zu trennen.

8. Drehkolbenmaschine nach Anspruch 7, **dadurch gekennzeichnet, dass** eine erste Austrittssteueröffnung (70), mittels derer der erste Volumenstrom aus dem wenigstens einen ersten Arbeitsraum (22) abführbar ist, mittels eines ersten verschlossenen Bypasses (86) mit der ersten Eintrittssteueröffnung (74) verbunden ist und/oder dass die zweite Austrittssteueröffnung (78), mittels derer der zweite Volumenstrom aus dem wenigstens einen zweiten Arbeitsraum (36) abführbar ist, mittels eines zweiten verschlossenen Bypasses (87) mit der zweiten Eintrittssteueröffnung (74) verbunden ist, wobei das erste Ventil (82) eingerichtet ist, bei der Trennung des wenigstens einen ersten Arbeitsraumes (22) von dem ersten Volumenstrom den ersten Bypass (87) zu öffnen und/oder das zweite Ventil (80) eingerichtet ist, bei der Trennung des wenigstens einen zweiten Arbeitsraumes (36) von dem zweiten Volumenstrom den zweiten Bypass (86) zu öffnen.

9. Drehkolbenmaschine nach Anspruch 5 oder 6, **dadurch gekennzeichnet, dass** das Gehäuse (64) eine erste Austrittssteueröffnung (70) aufweist, die mit einem Mittelraum (54) verbunden ist, wobei die erste Austrittsöffnung (70) derart eingerichtet ist, das durch den wenigstens einen ersten Arbeitsraum (22) vorverdichtete Medium aufzunehmen und dem Mittelraum (54) zuzuführen, wobei aus dem Mittelraum (54) das vorverdichtete Medium dem wenigstens einen zweiten Arbeitsraum (36) zum weiteren Verdichten zugeführt wird.

10. Drehkolbenmaschine nach Anspruch 9, **dadurch gekennzeichnet, dass** die erste Austrittsöffnung (70) in der Innenwandung (66) des Gehäuses (64) als Vertiefung ausgestaltet ist, dass der Mittelraum (54) in dem Deckel (60) ausgestaltet ist, wobei der Mittelraum (54) mit dem ersten innenliegenden Steuerkanal (72) verbunden ist, und dass der Deckel eine Austrittsöffnung aufweist, die mit dem zweiten innenliegenden Steuerkanal verbunden ist.

## Claims

1. Rotating piston machine, which operates as a pump, compressor or motor,
- with a rotor (2) and with a counterrotor (4), the counterrotor (4) being arranged opposite the rotor (2),
- the rotor (2) having a first end face (6) with a first toothing (8), the counterrotor (4) having a second end face (14) with a second toothing (16), and the first (8) and the second (16) toothing being formed in each case from at least one tooth (10, 18) and one tooth space (12, 20),
- the toothings (8, 16) being in engagement with one another in such a way that first working spaces (22) are formed as a result of the meshing of the teeth (10) of the first toothing (8) and of the teeth (18) of the second toothing (16), volumes formed by the first working spaces (22) being varied as a result of the meshing of the teeth (10, 18),
- the rotor (2) having a first axis of rotation (I), the counterrotor (4) having a second axis of rotation (II), the first axis of rotation (I) and the second axis of rotation (II) forming an angle (ϕ) which is unequal to 0°, **characterized in that**
- the first end face (6) of the rotor (2) has a third toothing (24) separated spatially from the first toothing (8) and the second end face (14) of the counterrotor (4) has a fourth toothing (30) separated spatially from the second toothing (16), the third (24) and the fourth (30) toothing being formed in each case from at least one tooth (26, 32) and one tooth space (28, 34), the third (24) and the fourth (30) toothing being in engagement with one another in such a way that second working spaces (36) are formed as a result of the meshing of the teeth (26) of the third toothing (24) and of the teeth (32) of the fourth toothing (30), volumes formed by the second working spaces (36) being varied as a result of the meshing of the teeth (26, 32).

2. Rotating piston machine according to Claim 1, **characterized**
- **in that** the first toothing (8) is designed, as seen in direction of the first end face (6), as a first outer ring (9) with a first mid-point (M') and with a first inner radius (r),
- **in that** the third toothing (24) is designed, as seen in direction of the first end face (16), as a first inner ring (25) with a third mid-point (M") and with a first outer radius (R),
- **in that** the first (M') and the third (M") mid-point coincide to form a mid-point (M1), the first inner radius (r) being equal to or larger than the first outer radius (R),
- **in that** the second toothing (16) is designed, as seen in direction of the second end face (14), as a second outer ring with a second mid-point and with a second inner radius,
- **in that** the fourth toothing (30) is designed, as seen in direction of the second end face (14), as a second inner ring with a fourth mid-point and with a second outer radius,
- **in that** the second and the fourth mid-point coincide to form a further mid-point, the second inner radius being equal to or larger than the second outer radius.

3. Rotating piston machine according to Claim 1 or 2, **characterized**
- **in that**, as seen transversely to the first end face (6), the first toothing (8) and the third toothing (24) are spaced apart by means of a first step (13),
- **in that**, as seen transversely to the second end face (14), the second toothing (16) and the fourth toothing (30) are spaced apart by means of a second step (21),
- **in that** the first (13) and the second (21) step are configured in such a way that the at least one first working space (22) and the at least one second working space (36) are separated spatially from one another in such a way that the rotating piston machine can be operated in a multi-stage or multi-channel manner.

4. Rotating piston machine according to one of the preceding claims, **characterized in that** a housing (64) accommodates the rotor (2) and the counterrotor (4) in such a way that the rotor (2) and the counterrotor (4) are guided rotatably, and **in that** the housing (64) has an inner wall (66) which copies a spherical outer contour of the rotors (2, 4) in such a way that the rotor (2) and/or the counterrotor (4) touch/touches the inner wall (66) or are spaced apart in a predetermined manner from the inner wall (66), the inner wall (66) having a fifth mid-point which coincides with a common mid-point (M).

5. Rotating piston machine according to Claim 4, **characterized in that** the housing (64) is closed fixedly in terms of rotation by means of a cover (60), the cover (60) having a control bolt (38), and the control bolt (38) being connected fixedly in terms of rotation to the cover (60).

6. Rotating piston machine according to Claim 5, **characterized in that** the control bolt (38) has a first internal control duct (72) and/or a second internal control duct (76), the first internal control duct (72) having a second inlet control port (74) and the second internal control duct (76) having a second outlet control port (78), so that a medium to be transported can be delivered to the at least one second working space (36) by means of the second inlet control port (74) and/or the medium to be transported can be discharged out of the at least one second working space (36) by means of the second outlet control port (78).

7. Rotating piston machine according to Claim 6, **characterized in that** the medium is divided into a first and a second volume flow, a first inlet control port (68), by means of which the first volume flow can be delivered to the at least one first working space (22), having a first valve (82), and/or the second inlet control port (74), by means of which the second volume flow can be delivered to the at least one second working space (36), having a second valve (80), the first (82) and the second (80) valve being designed to separate the at least one first working space (22) from the first volume flow and/or the at least one second working space (36) from the second volume flow.

8. Rotating piston machine according to Claim 7, **characterized in that** a first outlet control port (70), by means of which the first volume flow can be discharged out of the at least one first working space (22), is connected by means of a first closed bypass (86) to the first inlet control port (74), and/or **in that** the second outlet control port (78), by means of which the second volume flow can be discharged out of the at least one second working space (36), is connected by means of a second closed bypass (87) to the second inlet control port (74), the first valve (82) being designed to open the first bypass (87) upon the separation of the at least one first working space (22) from the first volume flow and/or the second valve (80) being designed to open the second bypass (86) upon the separation of the at least one second working space (36) from the second volume flow.

9. Rotating piston machine according to Claim 5 or 6, **characterized in that** the housing (64) has a first outlet control port (70) which is connected to a mid-space (54), the first outlet port (70) being designed to receive the medium pre-compressed by the at least one first working space (22) and to deliver the said medium to the mid-space (54), the pre-compressed medium being delivered from the mid-space (54) to the at least one second working space (36) for further compression.

10. Rotating piston machine according to Claim 9, **characterized in that** the first outlet port (70) in the inner wall (66) of the housing (64) is configured as a depression, **in that** the mid-space (54) is formed in the cover (60), the mid-space (54) being connected to the first internal control duct (72), and **in that** the cover has an outlet port which is connected to the second internal control duct.

## Revendications

1. Machine à piston rotatif, qui fonctionne en tant que pompe, compresseur ou moteur,
- comprenant un rotor (2) et un rotor conjugué (4), le rotor conjugué (4) étant disposé en regard du rotor (2),
- le rotor (2) comprenant une première surface frontale (6) pourvue d'une première denture (8), le rotor conjugué (4) comprenant une deuxième surface frontale (14) pourvue d'une deuxième denture (16), et la première (8) et la deuxième denture (16) étant formées respectivement à partir d'au moins une dent (10, 18) et d'un entredent (12, 20),
- les dentures (8, 16) étant en prise l'une avec l'autre de telle sorte que, par engrènement des dents (10) de la première denture (8) et des dents (18) de la deuxième denture (16), des premiers espaces de travail (22) soient formés, des volumes formés par les premiers espaces de travail (22) étant modifiés par l'engrènement des dents (10, 18),
- le rotor (2) présentant un premier axe de rotation (I), le rotor conjugué (4) présentant un deuxième axe de rotation (II), le premier axe de rotation (I) et le deuxième axe de rotation (II) formant un angle (ϕ) qui est différent de 0°, **caractérisée en ce que**
- la première surface frontale (6) du rotor (2) comprend une troisième denture (24) séparée spatialement de la première denture (8) et la deuxième surface frontale (14) du rotor conjugué (4) comprend une quatrième denture (30) séparée spatialement de la deuxième denture (16), la troisième (24) et la quatrième denture (30) étant formées respectivement à partir d'au moins une dent (26, 32) et d'un entredent (28, 34), la troisième (24) et la quatrième denture (30) étant en prise l'une avec l'autre de telle sorte que, par engrènement des dents (26) de la troisième denture (24) et des dents (32) de la quatrième denture (30), des deuxièmes espaces de travail (36) soient formés, des volumes formés par les deuxièmes espaces de travail (36) étant modifiés par l'engrènement des dents (26, 32).

2. Machine à piston rotatif selon la revendication 1, **caractérisée**
- **en ce que** la première denture (8) est, vue dans la direction de la première surface frontale (6), réalisée en tant que première bague extérieure (9) présentant un premier centre (M') et un premier rayon intérieur (r),
- **en ce que** la troisième denture (24) est, vue dans la direction de la première surface frontale (16), réalisée en tant que première bague intérieure (25) présentant un troisième centre (M") et un premier rayon extérieur (R),
- **en ce que** le premier (M') et le troisième centre (M") coïncident en un centre (M1), le premier rayon intérieur (r) étant supérieur ou égal au premier rayon extérieur (R),
- **en ce que** la deuxième denture (16) est, vue dans la direction de la deuxième surface frontale (14), réalisée en tant que deuxième bague extérieure présentant un deuxième centre et un deuxième rayon intérieur,
- **en ce que** la quatrième denture (30) est, vue dans la direction de la deuxième surface frontale (14), réalisée en tant que deuxième bague intérieure présentant un quatrième centre et un deuxième rayon extérieur,
- **en ce que** le deuxième et le quatrième centre coïncident en un centre supplémentaire, le deuxième rayon intérieur étant supérieur ou égal au deuxième rayon extérieur.

3. Machine à piston rotatif selon la revendication 1 ou 2, **caractérisée**
- **en ce que**, vu transversalement à la première surface frontale (6), la première denture (8) et la troisième denture (24) sont espacées par un premier étage (13),
- **en ce que**, vu transversalement à la deuxième surface frontale (14), la deuxième denture (16) et la quatrième denture (30) sont espacées par un deuxième étage (21),
- **en ce que** le premier (13) et le deuxième étage (21) sont configurés de telle sorte que l'au moins un premier espace de travail (22) et l'au moins un deuxième espace de travail (36) soient séparés spatialement l'un de l'autre de telle sorte que la machine à piston rotatif puisse fonctionner à étages multiples ou à flux multiples.

4. Machine à piston rotatif selon l'une quelconque des revendications précédentes, **caractérisée en ce qu'**un boîtier (64) reçoit le rotor (2) et le rotor conjugué (4) de telle sorte que le rotor (2) et le rotor conjugué (4) soient guidés de manière rotative, et **en ce que** le boîtier (64) présente une paroi intérieure (66) qui reproduit un contour extérieur sphérique des rotors (2, 4) de telle sorte que le rotor (2) et/ou le rotor conjugué (4) soient en contact avec la paroi intérieure (66) ou soient espacés de manière prédéfinie de la paroi intérieure (66), la paroi intérieure (66) présentant un cinquième centre qui coïncide avec un centre commun (M).

5. Machine à piston rotatif selon la revendication 4, **caractérisée en ce que** le boîtier (64) est fermé de manière solidaire en rotation par un couvercle (60), le couvercle (60) comprenant un boulon de commande (38), et le boulon de commande (38) étant relié de manière solidaire en rotation au couvercle (60).

6. Machine à piston rotatif selon la revendication 5, **caractérisée en ce que** le boulon de commande (38) présente un premier canal de commande (72) situé à l'intérieur et/ou un deuxième canal de commande (76) situé à l'intérieur, le premier canal de commande (72) situé à l'intérieur présentant une deuxième ouverture de commande d'entrée (74) et le deuxième canal de commande (76) situé à l'intérieur présentant une deuxième ouverture de commande de sortie (78), de telle sorte qu'un milieu à transporter puisse être acheminé jusqu'à l'au moins un deuxième espace de travail (36) au moyen de la deuxième ouverture de commande d'entrée (74) et/ou que le milieu à transporter puisse être évacué hors de l'au moins un deuxième espace de travail (36) au moyen de la deuxième ouverture de commande de sortie (78).

7. Machine à piston rotatif selon la revendication 6, **caractérisée en ce que** le milieu est séparé en un premier et un deuxième flux volumique, une première ouverture de commande d'entrée (68), au moyen de laquelle le premier flux volumique peut être acheminé jusqu'à l'au moins un premier espace de travail (22), comprenant une première soupape (82) et/ou la deuxième ouverture de commande d'entrée (74), au moyen de laquelle le deuxième flux volumique peut être acheminé jusqu'à l'au moins un deuxième espace de travail (36), comprenant une deuxième soupape (80), la première (82) et la deuxième soupape (80) étant conçues pour séparer l'au moins un premier espace de travail (22) du premier flux volumique et/ou l'au moins un deuxième espace de travail (36) du deuxième flux volumique.

8. Machine à piston rotatif selon la revendication 7, **caractérisée en ce qu'**une première ouverture de commande de sortie (70), au moyen de laquelle le premier flux volumique peut être évacué hors de l'au moins un premier espace de travail (22), est reliée à la première ouverture de commande d'entrée (74) au moyen d'une première dérivation fermée (86) et/ou **en ce que** la deuxième ouverture de commande de sortie (78), au moyen de laquelle le deuxième flux volumique peut être évacué hors de l'au moins un deuxième espace de travail (36), est reliée à la deuxième ouverture de commande d'entrée (74) au moyen d'une deuxième dérivation fermée (87), la première soupape (82) étant conçue pour, lors de la séparation de l'au moins un premier espace de travail (22) du premier flux volumique, ouvrir la première dérivation (87) et/ou la deuxième soupape (80) étant conçue pour, lors de la séparation de l'au moins un deuxième espace de travail (36) du deuxième flux volumique, ouvrir la deuxième dérivation (86).

9. Machine à piston rotatif selon la revendication 5 ou 6, **caractérisée en ce que** le boîtier (64) présente une première ouverture de commande de sortie (70) qui est reliée à un espace central (54), la première ouverture de sortie (70) étant conçue de manière à recevoir le milieu pré-comprimé au moyen de l'au moins un premier espace de travail (22) et à l'acheminer jusqu'à l'espace central (54), le milieu pré-comprimé étant acheminé à partir de l'espace central (54) jusqu'à l'au moins un deuxième espace de travail (36) en vue d'une compression supplémentaire.

10. Machine à piston rotatif selon la revendication 9, **caractérisée en ce que** la première ouverture de sortie (70) est configurée en tant que renfoncement dans la paroi intérieure (66) du boîtier (64), **en ce que** l'espace central (54) est configuré dans le couvercle (60), l'espace central (54) étant relié au premier canal de commande (72) situé à l'intérieur, et **en ce que** le couvercle présente une ouverture de sortie qui est reliée au deuxième canal de commande situé à l'intérieur.
